# EUROPEAN PATENT SPECIFICATION

(11) **EP 4 437 799 B1**
(45) Date of publication and mention of the grant of the patent: **29.04.2026**
(21) Application number: 22930240.1
(22) Date of filing: 08.03.2022
(51) Int. Cl.: H04W 76/19, H04W 76/27, H04W 76/30, H04W 84/04, H04W 60/02, H04W 60/04, H04W 76/14, H04W 88/04

(54) **METHOD AND APPARATUS FOR WIRELESS COMMUNICATION**
VERFAHREN UND VORRICHTUNGEN ZUR DRAHTLOSEN KOMMUNIKATION
PROCÉDÉ ET APPAREILS DE COMMUNICATION SANS FIL

(43) Date of publication of application: 02.10.2024
(73) Proprietor: Lenovo (Beijing) Limited, Beijing 100085 (CN)
(72) Inventor: WU, Lianhai, Beijing 100094 (CN)
(74) Representative: Marks & Clerk LLP
(86) International application number: PCT/CN2022/079740
(87) International publication number: WO 2023/168594

(56) References cited:
- EP-A2- 3 790 351
- EP-A2- 3 790 351
- WO-A1-2021/224149
- WO-A1-2021/238864
- WO-A1-2021/238864
- CN-A- 113 873 580
- INTEL CORPORATION: "Service Continuity support for L2 U2N Relaying", 3GPP DRAFT; R2-2104891, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. e-Meeting; 20210519 - 20210527, 11 May 2021 (2021-05-11), Mobile Competence Centre ; 650, route des Lucioles ; F-06921 Sophia-Antipolis Cedex ; France , XP052006634

## Description

### TECHNICAL FIELD

Embodiments of the present disclosure generally relate to communication technology, and more particularly to wireless communications in a communication system.

### BACKGROUND

Wireless communication systems are widely deployed to provide various telecommunication services, such as telephony, video, data, messaging, broadcasts, and so on. Wireless communication systems may employ multiple access technologies capable of supporting communication with multiple users by sharing available system resources (e.g., time, frequency, and power). Examples of wireless communication systems may include fourth generation (4G) systems, such as long term evolution (LTE) systems, LTE-advanced (LTE-A) systems, or LTE-A Pro systems, and fifth generation (5G) systems which may also be referred to as new radio (NR) systems.

In the above wireless communication systems, a user equipment (UE) may communicate with another UE via a data path supported by an operator's network, e.g., a cellular or a Wi-Fi network infrastructure. The data path supported by the operator's network may include a base station (BS) and multiple gateways.

Some wireless communication systems may support sidelink communications, in which devices (e.g., UEs) that are relatively close to each other may communicate with one another directly via a sidelink, rather than being linked through the BS. A relaying function based on a sidelink may be supported in a communication network. For example, a UE supporting sidelink communication may function as a relay node to extend the coverage of a BS. An out-of-coverage or in-coverage UE may communicate with a BS via a relay node (e.g., a relay UE). In the context of the present disclosure, a UE, which functions as a relay between another UE and a BS, may be referred to as a UE-to-network (U2N) relay.

There is a need for efficiently performing communication in a communication system supporting a U2N relay.
EP3790351 relates to techniques for performing radio resource control procedures for remote wireless devices in a wireless communication system. A remote wireless device may transmit a radio resource control message that includes information configured to be relayed to a cellular base station to a relay wireless device, which may relay the information to the cellular base station. The cellular base station may also transmit a radio resource control message that includes information configured to be relayed to the remote wireless device to the relay wireless device, which may relay the information to the remote wireless device.
WO2021238864 discloses methods and apparatuses for controlling the connection state of a terminal device. According to an embodiment, a user plane of a base station determines whether a first terminal device that acts as a terminal device to a network relay for one or more second terminal devices in radio resource control (RRC) connected state is inactive, based on traffic conditions of the first terminal device and the one or more second terminal devices. The user plane reports a result of the determination to a control plane of the base station.

### SUMMARY

In accordance with an aspect of the present disclosure, there is provided a user equipment, relay node and a method as defined by the independent claims. Other aspects of the present disclosure are defined in the dependent claims.

### BRIEF DESCRIPTION OF THE DRAWINGS

In order to describe the manner in which the advantages and features of the disclosure can be obtained, a description of the disclosure is rendered by reference to specific embodiments thereof, which are illustrated in the appended drawings. These drawings depict only exemplary embodiments of the disclosure and are not therefore to be considered limiting of its scope.
FIG. 1 illustrates a schematic diagram of a wireless communication system in accordance with some embodiments of the present disclosure;
FIG. 2 illustrates a schematic diagram of a relay based wireless communication system in accordance with some embodiments of the present disclosure;
FIG. 3 illustrates a flow chart of an exemplary procedure of a RAN-based notification area (RNA) update in accordance with some embodiments of the present disclosure;
FIG. 4 illustrates a flow chart of an exemplary procedure of wireless communications in accordance with some embodiments of the present disclosure;
FIG. 5 illustrates a flow chart of an exemplary procedure of wireless communications in accordance with some embodiments of the present disclosure;
FIG. 6 illustrates a flow chart of an exemplary procedure of wireless communications in accordance with some embodiments of the present disclosure;
FIG. 7 illustrates a flow chart of an exemplary procedure of wireless communications in accordance with some embodiments of the present disclosure;
FIG. 8 illustrates a flow chart of an exemplary procedure of wireless communications in accordance with some embodiments of the present disclosure;
FIG. 9 illustrates a flow chart of an exemplary procedure of wireless communications in accordance with some embodiments of the present disclosure;
FIG. 10 illustrates a flow chart of an exemplary procedure of wireless communications in accordance with some embodiments of the present disclosure;
FIG. 11 illustrates a flow chart of an exemplary procedure of wireless communications in accordance with some embodiments of the present disclosure;
FIG. 12 illustrates a flow chart of an exemplary procedure of wireless communications in accordance with some embodiments of the present disclosure; and
FIG. 13 illustrates a block diagram of an exemplary apparatus in accordance with some embodiments of the present disclosure.

### DETAILED DESCRIPTION

The detailed description of the appended drawings is intended as a description of the preferred embodiments of the present disclosure and is not intended to represent the only form in which the present disclosure may be practiced. It should be understood that the same or equivalent functions may be accomplished by different embodiments that are intended to be encompassed within the spirit and scope of the present disclosure.

Reference will now be made in detail to some embodiments of the present disclosure, examples of which are illustrated in the accompanying drawings. To facilitate understanding, embodiments are provided under specific network architectures and new service scenarios, such as the 3rd generation partnership project (3GPP) 5G (NR), 3GPP long-term evolution (LTE) Release 8, and so on. It is contemplated that along with the developments of network architectures and new service scenarios, all embodiments in the present disclosure are also applicable to similar technical problems; and moreover, the terminologies recited in the present disclosure may change, which should not affect the principles of the present disclosure.

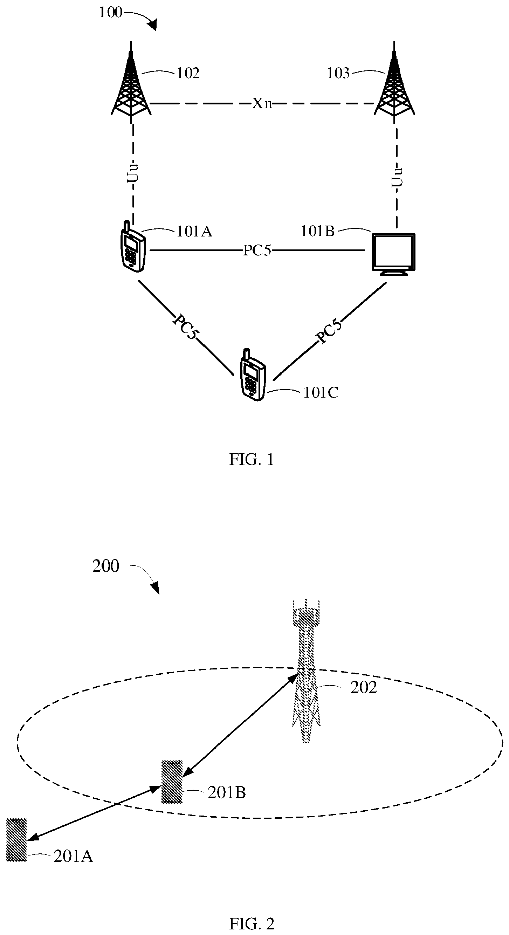

FIG. 1 illustrates a schematic diagram of a wireless communication system 100 in accordance with some embodiments of the present disclosure.

As shown in FIG. 1, the wireless communication system 100 may support sidelink communications. Sidelink communication supports UE-to-UE direct communication. In the context of the present disclosure, sidelink communications may be categorized according to the wireless communication technologies adopted. For example, sidelink communication may include NR sidelink communication and V2X sidelink communication.

NR sidelink communications (e.g., specified in 3GPP specification TS 38.311) may refer to access stratum (AS) functionality enabling at least vehicle-to-everything (V2X) communications as defined in 3GPP specification TS 23.287 between neighboring UEs, using NR technology but not traversing any network node. V2X sidelink communications (e.g., specified in 3GPP specification TS 36.311) may refer to AS functionality enabling V2X communications as defined in 3GPP specification TS 23.285 between neighboring UEs, using evolved-universal mobile telecommunication system (UMTS) terrestrial radio access (UTRA) (E-UTRA) technology, but not traversing any network node. However, if not being specified, "sidelink communications" may refer to NR sidelink communications, V2X sidelink communications, or any sidelink communications adopting other wireless communication technologies.

Referring to FIG. 1, the wireless communication system 100 may include some base stations (e.g., BS 102 and BS 103) and some UEs (e.g., UE 101A, UE 101B, and UE 101C). Although a specific number of UEs and BSs is depicted in FIG. 1, it is contemplated that any number of UEs and BSs may be included in the wireless communication system 100.

The UEs and the BSs may support communication based on, for example, 3G, long-term evolution (LTE), LTE-advanced (LTE-A), new radio (NR), or other suitable protocol(s). In some embodiments of the present disclosure, a BS (e.g., BS 102 or BS 103) may be referred to as an access point, an access terminal, a base, a base unit, a macro cell, a Node-B, an evolved Node B (eNB), a gNB, an ng-eNB, a Home Node-B, a relay node, or a device, or described using other terminology used in the art. A UE (e.g., UE 101A, UE 101B, or UE 101C) may include, for example, but is not limited to, a computing device, a wearable device, a mobile device, an IoT device, a vehicle, etc. Persons skilled in the art should understand that as technology develops and advances, the terminologies described in the present disclosure may change, but should not affect or limit the principles and spirit of the present disclosure.

In the example of FIG. 1, the BS 102 and the BS 103 may be included in a next generation radio access network (NG-RAN). In some embodiments of the present disclosure, the BS 102 may be a gNB and the BS 103 may be an ng-eNB.

The UE 101A and UE 101B may be in-coverage (e.g., inside the NG-RAN). For example, as shown in FIG. 1, the UE 101A may be within the coverage of BS 102, and the UE 101B may be within the coverage of BS 103. The UE 101C may be out-of-coverage (e.g., outside the coverage of the NG-RAN). For example, as shown in FIG. 1, the UE 101C may be outside the coverage of any BS, for example, both the BS 102 and BS 103. The UE 101A and UE 101B may respectively connect to the BS 102 and BS 103 via a network interface, for example, the Uu interface as specified in 3GPP standard documents. The control plane protocol stack in the Uu interface may include a radio resource control (RRC) layer, which may be referred to as a Uu RRC. The link established between a UE (e.g., UE 101A) and a BS (e.g., BS 102) may be referred to as a Uu link. The BS 102 and BS 103 may be connected to each other via a network interface, for example, the Xn interface as specified in 3GPP standard documents. The UE 101A, UE 101B, and UE 101C may be connected to each other respectively via, for example, a PC5 interface as specified in 3GPP standard documents. The control plane protocol stack in the PC5 interface may include a radio resource control (RRC) layer, which may be referred to as a PC5 RRC. The link established between two UEs (e.g., UE 101A and UE 101B) may be referred to as a PC5 link.

Support for V2X services via the PC5 interface can be provided by, for example, NR sidelink communication and/or V2X sidelink communication. NR sidelink communication can support one of the following three types of transmission modes for a pair of a source Layer-2 identity and a destination Layer-2 identity: unicast transmission, groupcast transmission, and broadcast transmission. Sidelink communication transmission and reception over the PC5 interface are supported when the UE is either in-coverage or out-of-coverage. For example, the UE 101A, which is within the coverage of the BS 102, can perform sidelink transmission and reception (e.g., sidelink unicast transmission, sidelink groupcast transmission, or sidelink broadcast transmission) over a PC5 interface. The UE 101C, which is outside the coverage of both the BS 102 and BS 103, can also perform sidelink transmission and reception over a PC5 interface.

A UE which supports sidelink communication and/or V2X communication may be referred to as a V2X UE. A V2X UE may be a cell phone, a vehicle, a roadmap device, a computer, a laptop, an IoT (internet of things) device or other type of device in accordance with some other embodiments of the present disclosure.

As mentioned above, the relaying function based on a sidelink may be supported in a communication network. In some embodiments of the present disclosure, a UE-to-network relay is supported. For example, an in-coverage UE in communication with a remote UE (e.g., an out-of-coverage UE or in-coverage UE) may function as a relay UE between the serving BS of the in-coverage UE and the remote UE. The remote UE may thus communicate with the BS via this relay UE. The data between the remote UE and the BS may be transferred by the relay UE. In this scenario, the relay UE may be referred to as a serving relay of the remote UE, and the serving BS or serving cell of the relay UE may be referred to as the serving BS or serving cell of the remote UE.

FIG. 2 illustrates a schematic diagram of a relay based wireless communication system 200 in accordance with some embodiments of the present disclosure. Details described in all of the foregoing embodiments of the present disclosure are applicable for the embodiments shown in FIG. 2.

As shown in FIG. 2, the wireless communication system 200 may include a BS (e.g., BS 202) and some UEs (e.g., UE 201A and UE 201B). Although a specific number of UEs and BS is depicted in FIG. 2, it is contemplated that any number of UEs and BSs may be included in the wireless communication system 200. In some examples, UE 201B may function as UE 101A or UE 101B shown in FIG. 1, and UE 201A may function as UE 101C shown in FIG. 1.

UE 201B may be within the coverage of BS 202. For example, UE 201B and BS 202 may establish an RRC connection therebetween. UE 201A may be outside of the coverage of BS 202. The wireless communication system 200 may support sidelink communications. For example, UE 201B may be in sidelink communication with UE 201A. A PC5 RRC connection may be established between UE 201A and UE 201B.

In some embodiments of the present disclosure, UE 201A may initiate a procedure for establishing a connection with BS 202 via UE 201B (i.e., UE-to-network relay). For example, UE 201A may transmit an RRC setup request to BS 202 via UE 201B. BS 202 may transmit an RRC setup message including a response to UE 201A via UE 201B. After such procedure, UE 201A may access BS 202 (e.g., a cell of BS 202) via UE 201B. This cell may be referred to as a serving cell of UE 201A. UE 201A and BS 202 may establish an RRC connection therebetween. UE 201A may have RRC states, such as an RRC_IDLE state, an RRC_INACTIVE state, and an RRC_CONNECTED state. UE 201A may also be referred to as a remote UE and UE 201B may also be referred to as a relay UE or a serving relay of UE 201A.

It should be appreciated by persons skilled in the art that although a single relay node (e.g., UE 201B) between UE 201A and BS 202 is depicted in FIG. 2, it is contemplated that any number of relay nodes may be included. Although it is shown in FIG. 2 that UE 201A is outside of the coverage of BS 202, it is contemplated that UE 201A may be within the coverage of BS 202 in some other embodiments of the present disclosure. In these embodiments, UE 201A may directly connect to BS 202 and/or connect to BS 202 via UE 201B.

A UE (e.g., UE 201A or UE 201B in FIG. 1) may be in one of the following states: RRC_IDLE state, RRC_CONNECTED state, and RRC_INACTIVE state, at a given time. In an RRC_INACTIVE state (hereinafter, "an inactive state"), a UE does not have an RRC connection with the radio access network (RAN), for example, BS 202. However, the RAN keeps a connection with the core network for the UE. Therefore, an RRC_INACTIVE state may achieve power saving with acceptable access latency. The specific characteristics of an RRC_IDLE state, RRC_CONNECTED state, and RRC_INACTIVE state are defined in 3GPP specifications.

A UE in the inactive state can be configured by the last serving RAN node (e.g., a BS) with an RNA. The RNA may cover one or more cells, and shall be included within the core network (CN) registration area. In some embodiments, Xn connectivity may be available within the RNA.

A RAN-based notification area (RNA) may allow a RAN node (e.g., a BS) to know the rough location of a UE that is in an inactive state (inactive UE). For example, a RAN node may trigger a paging procedure for an inactive UE within the UE's RNA when the RAN node wants to exchange data or control signaling with the inactive UE. An RNA update may be periodically transmitted by a UE (also referred to as "periodic RNA update"). An RNA update may also be transmitted by a UE when the UE reselects a cell that does not belong to the same RNA for the previous cell (that is, triggered by the RNA change).

In some embodiments, an RNA can be configured via a list of cells. For example, a UE may be provided with an explicit list of cells (one or more cells) that constitute the RNA. In some embodiments, an RNA can be configured via a list of RAN areas (one or more RAN areas). For example, a UE may be provided with (at least one) RAN area ID. A RAN area may be a subset of a CN tracking area or equal to a CN tracking area. A RAN area may be specified by a RAN area ID, which may include a tracking area code (TAC) and (optionally) a RAN area code. In some examples, a cell may broadcast one or more RAN area IDs in the system information. A RAN may provide different RNA definitions to different UEs, but would not mix different definitions to the same UE at the same time. A UE may support all RNA configuration options as mentioned above.

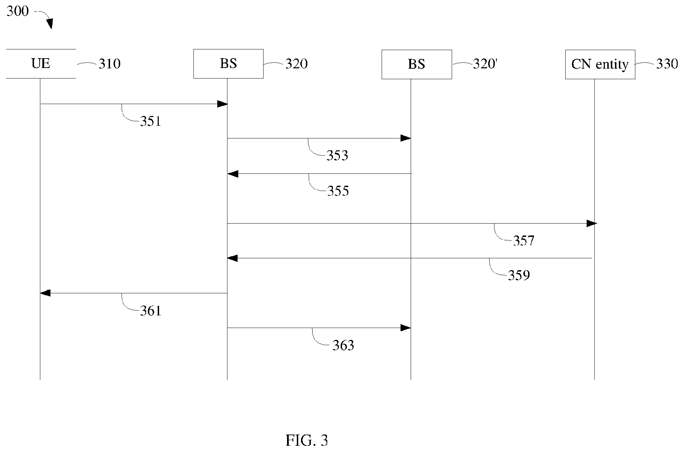

FIG. 3 illustrates a flow chart of an exemplary procedure 300 of an RNA update in accordance with some embodiments of the present disclosure. Details described in all of the foregoing embodiments of the present disclosure are applicable for the embodiments shown in FIG. 3. The exemplary procedure 300 can be applicable to the above two types of RNA update, i.e., an RNA update triggered by the RNA change and a periodic RNA update, and other types of an RNA update.

Referring to FIG. 3, at the beginning, UE 310 may communicate with BS 320'. At a certain time, UE 310 may transition to an inactive state, and may be configured with an RNA by BS 320'. In some examples, UE 310 may resume from the inactive state, and may, in operation 351, transmit an RRC resume request to a new base station (e.g., BS 320). In some embodiments, the resume request may include a cause value indicating an RNA update. In some embodiments, the resume request may include the identity of UE 310. The identity of UE 310 may be a resume ID configured by the last serving base station (e.g., BS 320') in an RRC release message. The resume ID may include information regarding the last serving base station (e.g., BS 320'). In some embodiments, a resume ID may include an inactive-radio network temporary identifier (I-RNTI) allocated by the last serving base station.

In operation 353, BS 320 may transmit a request for acquiring UE context of UE 310 to the lasting serving base station (e.g., BS 320') of UE 310 if BS 320 is able to resolve the identity of the lasting serving base station. In some embodiments, the request for acquiring UE context may include the identity of UE 310. In some embodiments, the request for acquiring UE context may include the cause value received from UE 310. In operation 355, BS 320' may transmit the UE context of UE 310 to BS 320. BS 320 may send UE 310 back to the inactive state.

In some embodiments, if loss of downlink user data buffered in the last serving BS should be prevented, BS 320 may provide a forwarding address to BS 320' (not shown in FIG. 3).

In operations 357 and 359, BS 320 may perform a path switch procedure for UE 310. In operation 357, BS 320 may transmit a path switch request for the UE 310 to the core network (e.g., CN entity 330, which can be an access and mobility management function (AMF)). In operation 359, CN entity 330 may transmit a path switch request response to BS 320. The path switch request response may include the identity of UE 310.

In operation 361, BS 320 may transmit an RRC release message including a suspend configuration to UE 310 so as to keep UE 310 in the inactive state. In operation 363, BS 320 may transmit a UE context release message to BS 320'. The release message may include the identity of UE 310.

It should be appreciated by persons skilled in the art that the sequence of the operations in exemplary procedure 300 may be changed and some of the operations in exemplary procedure 300 may be eliminated or modified, without departing from the spirit and scope of the disclosure.

A UE (remote UE) accessing a BS via a relay node (e.g., relay UE) may also perform an RNA update. In some embodiments of the present disclosure, the remote UE may perform an RNA update procedure similar to the exemplary procedure 300. In some examples, a remote UE may perform an RNA update procedure via a relay node. For example, an inactive remote UE may transmit an RRC resume request to a BS via a relay node. In the context of the present disclosure, a relay node may be a relay UE.

Various issues may occur in a communication system supporting a relay node between a UE and a BS. For example. how to handle the RNA update for an inactive remote UE, how to handle a reestablishment procedure of a remote UE, and how to handle a setup request of a remote UE, and how to handle various configurations and radio bearers associated with the sidelink between the relay node and a remote UE. Solutions are proposed to solve at least the above-mentioned issues. More details on the embodiments of the present disclosure will be illustrated in the following text in combination with the appended drawings.

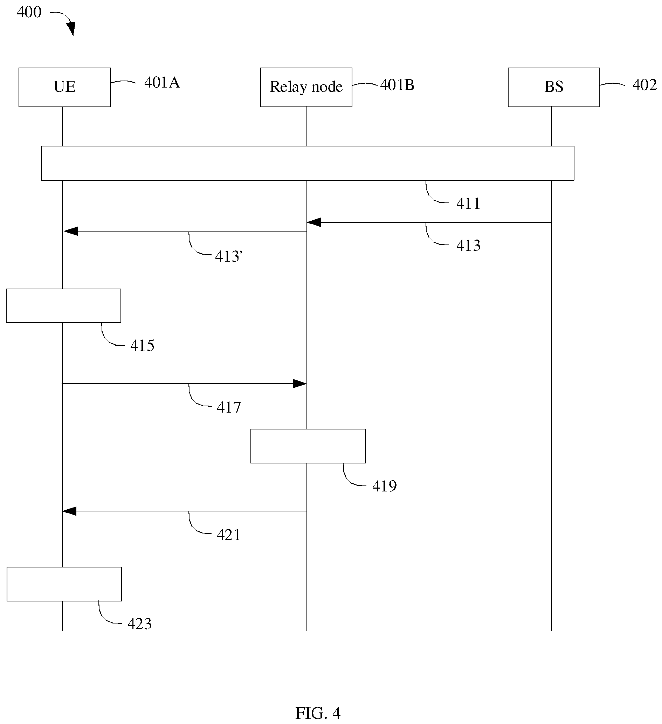

FIG. 4 illustrates a flow chart of an exemplary procedure 400 for wireless communications in accordance with some embodiments of the present disclosure. Details described in all of the foregoing embodiments of the present disclosure are applicable for the embodiments shown in FIG. 4.

Referring to FIG. 4, in operation 411, UE 401A may communicate with BS 402 via relay node 401B. UE 401A may also be referred to as a remote UE. UE 401A may be in an RRC_CONNECTED state (hereinafter, "a connected state"). In some examples, relay node 401B may be a relay UE, such as a layer 2 UE-to-Network (L2 U2N) relay UE. In some examples, BS 402 may transmit an indication which indicates whether an L2 relay is supported or not.

In some examples, BS 402 may transmit an RRC reconfiguration message to UE 401A via relay node 401B. The RRC reconfiguration message may indicate a remote UE related configuration. The configuration may be associated with the PC5 link between UE 401A and relay node 401B. For example, the RRC reconfiguration message may include a relay operation related configuration used by a remote UE.

In some examples, BS 402 may transmit an RRC reconfiguration message to relay node 401B. The RRC reconfiguration message may indicate a relay node related configuration. The configuration may be associated with the PC5 link between UE 401A and relay node 401B. For example, the RRC reconfiguration message may include a relay operation related configuration used by a relay node.

In operations 413 and 413', BS 402 may transmit an RRC release message including a suspend configuration to UE 401A via relay node 401B. In response to the RRC release message including the suspend configuration, UE 401A may enter an inactive state in operation 415.

In some embodiments, when, for example, a timer value of a periodic RNA update is included in the RRC release message, UE 401A may start a periodic RNA update timer (e.g., timer T380 as specified in 3GPP specifications).

In some embodiments, in response to the RRC release message including the suspend configuration, UE 401A may suspend or release (e.g., all) signaling radio bearers (SRBs) and data radio bearers (DRBs) associated with the link between UE 401A and relay node 401B.

In some embodiments, UE 401A may initiate an RNA update which may be a periodic RNA update or may be triggered by the RNA change. In some examples, UE 401A may initiate an RNA update when the periodic RNA update timer expires. In some examples, UE 401A may initiate an RNA update when it reselects a neighbor cell belonging to a different RAN notification area.

In response to the initiation of the RNA update procedure, UE 401A may, in operation 417, transmit an RRC resume request to relay node 401B. The RRC resume request may be an *RRCResumeRequest* or an *RRCResumeRequest1* as specified in 3GPP specifications (e.g., TS38.331). In some embodiments, relay node 401B may be in a connected state, and may transmit the RRC resume request from UE 401A to the network (e.g., BS 402).

In some embodiments, before receiving a response to the RRC resume request or before transmitting the RRC resume request from UE 401A to the network, relay node 401B may receive a handover command or detect a radio link failure (RLF) on Uu interface (e.g., an RLF occurs on the link between relay node 401B and BS 402) in operation 419. In operation 421, relay node 401B may transmit a notification message or a PC5 release message to UE 401A in response to the relay node handover or Uu RLF. In some examples, the notification message may indicate the relay handover or the Uu RLF.

In the context of the present disclosure, a PC5 release message may be a PC5-S release message. A notification message may be a *NotificationMessageSidelink* message as specified in 3GPP specifications.

In some embodiments, in response to the notification message or the PC5 release message, UE 401A may set a variable to indicate that there is a pending RNA update procedure. For example, the variable may indicate whether there is a pending RNA update procedure or not. The variable may be a BOOLEAN variable. Setting the variable to "TRUE" may denote that there is a pending RNA update procedure; and setting the variable to "FALSE" may denote that there is no pending RNA update procedure. UE 401A may set the variable to "TRUE."

In some embodiments, in response to the notification message or the PC5 release message, UE 401A may (re)start a periodic RNA update timer. For example, in the case that the RNA update initiated by UE 401A is a periodic RNA update, UE 401A may restart the periodic RNA update timer.

In operation 423, UE 401A may perform an RNA update procedure again. In some embodiments, UE 401A may transmit an RRC resume request including the cause of "RNA-update" in response to the completion of the handover or re-establishment procedure of relay node 401B. In some embodiments, UE 401A may transmit an RRC resume request including the cause of "RNA-update" in response to UE 401A reselecting another relay or another cell. In some embodiments, UE 401A may transmit an RRC resume request including the cause of "RNA-update" in response to the expiry of the periodic RNA update timer.

It should be appreciated by persons skilled in the art that the sequence of the operations in exemplary procedure 400 may be changed and that some of the operations in exemplary procedure 400 may be eliminated or modified, without departing from the spirit and scope of the disclosure.

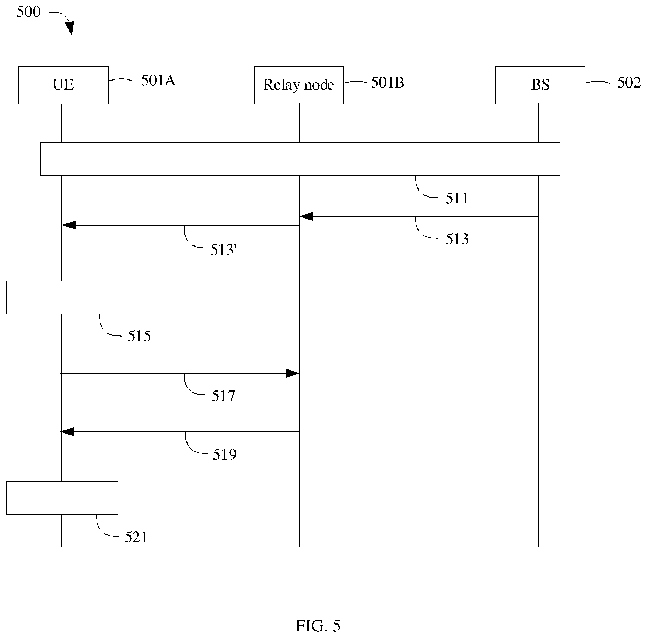

FIG. 5 illustrates a flow chart of an exemplary procedure 500 for wireless communications in accordance with some embodiments of the present disclosure. Details described in all of the foregoing embodiments of the present disclosure are applicable for the embodiments shown in FIG. 5.

Referring to FIG. 5, in operation 511, UE 501A may communicate with BS 502 via relay node 501B. UE 501A may also be referred to as a remote UE. UE 501A may be in an RRC_CONNECTED state (hereinafter, "a connected state"). In some examples, relay node 501B may be a relay UE, such as a layer 2 UE-to-Network (L2 U2N) relay UE. In some examples, BS 502 may transmit an indication which indicates whether an L2 relay is supported or not.

In some examples, BS 502 may transmit an RRC reconfiguration message to UE 501A via relay node 501B. The RRC reconfiguration message may indicate a remote UE related configuration. The configuration may be associated with the PC5 link between UE 501A and relay node 501B. For example, the RRC reconfiguration message may include a relay operation related configuration used by a remote UE.

In some examples, BS 502 may transmit an RRC reconfiguration message to relay node 501B. The RRC reconfiguration message may indicate a relay node related configuration. The configuration may be associated with the PC5 link between UE 501A and relay node 501B. For example, the RRC reconfiguration message may include a relay operation related configuration used by a relay node.

In operations 513 and 513', BS 502 may transmit an RRC release message including a suspend configuration to UE 501A via relay node 501B. In response to the RRC release message including the suspend configuration, UE 501A may enter an inactive state in operation 515.

In some embodiments, when, for example, a timer value of a periodic RNA update is included in the RRC release message, UE 501A may start a periodic RNA update timer (e.g., timer T380 as specified in 3GPP specifications).

In some embodiments, in response to the RRC release message including the suspend configuration, UE 501A may suspend or release (e.g., all) signaling radio bearers (SRBs) and data radio bearers (DRBs) associated with the link between UE 501A and relay node 501B.

In some embodiments, UE 501A may initiate an RNA update which may be a periodic RNA update or may be triggered by the RNA change. In some examples, UE 501A may initiate an RNA update when the periodic RNA update timer expires. In some examples, UE 501A may initiate an RNA update when it reselects a neighbor cell belonging to a different RAN notification area.

In response to the initiation of the RNA update procedure, UE 501A may, in operation 517, transmit an RRC resume request to relay node 501B. The RRC resume request may be an *RRCResumeRequest* or an *RRCResumeRequest1* as specified in 3GPP specifications (e.g., TS38.331).

In some embodiments, relay node 501B may be in an RRC_IDLE state (hereinafter, "an idle state"). Relay node 501B may initiate a connection establishment procedure in response to receiving the RRC resume request. In some embodiments, relay node 501B may be in an inactive state. Relay node 501B may initiate a connection resume procedure in response to receiving the RRC resume request. In some scenarios, relay node 501B may fail to access the network (e.g., BS 502).

For example, relay node 501B may perform a unified access control procedure. The unified access control procedure may use the access category and access identities provided by upper layers. In the case that the access attempt is considered as barred, relay node 501B may start an access barring timer (e.g., timer T390 as specified in 3GPP specifications) for the access category. Relay node 501B may perform a new access attempt in response to the expiry of the timer.

The value of the access barring timer can be determined by: (1) drawing a random number *'rand'* in the range of 0 ≤ *rand <* 1; and (2) timer value = (0.7+ 0.6×*rand*) × *uac-BarringTime,* where *uac-BarringTime* may be included in "UAC barring parameter" which may be broadcast by a BS (e.g., BS 502).

In the case that the access attempt is not considered as barred, relay node 501B may transmit an RRC setup request message to the network (e.g., BS 502) in the case that relay node 501B is in an idle state; or the relay node 501B may transmit an RRC resume request message to the network (e.g., BS 502) in the case that relay node 501B is in an inactive state. In some cases, BS 502 may transmit an RRC reject message including a wait time as a response. Relay node 501B may start a reject wait timer (e.g., timer T302 as specified in 3GPP specifications) with its value set to the indicated wait time. Relay node 501B may transmit an RRC setup request message or an RRC resume request message to the network (e.g., BS 502) in response to the expiry of reject wait timer.

In response to that relay node 501B fails to access the network (e.g., a connection establishment failure due to the failure of the connection establishment procedure or the connection resume procedure as described above), relay node 501B may, in operation 519, transmit a notification message or a PC5 release message to UE 501A.

In some embodiments, relay node 501B may be in a connected state when receiving the RRC resume request from UE 501A. In some examples, in response to the RRC resume request, relay node 501B may, in operation 519, transmit a notification message or a PC5 release message to UE 501A when, for example, a relay handover or a relay reestablishment is in progress. For example, a handover timer (e.g., T304 as specified in 3GPP specifications) may be running when the RRC resume request is received.

In some embodiments, the notification message may indicate a connection establishment failure, a relay handover, or a cell reselection. In some embodiments, the notification message or the PC5 release message may indicate a time value. The timer value may indicate at least one of the following: an access barring time associated with a barred access attempt of relay node 501B (e.g., the value of the timer T390 at relay node 501B); a wait time associated with an RRC rejection of relay node 501B from BS 502 (e.g., the value of the timer T302 at relay node 501B); a value of a timer associated with a handover associated with relay node 501B (e.g., the value of the timer T304 at relay node 501B); or a suggested time for a next transmission. UE 501A can transmit the RRC resume request again based on the indicated time value (e.g., after the suggested time has passed).

In some embodiments, in response to the notification message or the PC5 release message, UE 501A may set a variable to indicate that there is a pending RNA update procedure. For example, the variable may indicate whether there is a pending RNA update procedure or not. The variable may be a BOOLEAN variable. Setting the variable to "TRUE" may denote that there is a pending RNA update procedure; and setting the variable to "FALSE" may denote that there is no pending RNA update procedure. UE 501A may set the variable to "TRUE."

In some embodiments, in response to the notification message or the PC5 release message, UE 501A may (re)start a periodic RNA update timer. For example, in the case that the RNA update initiated by UE 501A is a periodic RNA update, UE 501A may restart the periodic RNA update timer.

In operation 521, UE 501A may perform an RNA update procedure again. In some embodiments, UE 501A may transmit an RRC resume request including the cause of "RNA-update" in response to the completion of the connection establishment procedure or connection resume procedure of relay node 501B. In some embodiments, UE 501A may transmit an RRC resume request including the cause of "RNA-update" in response to UE 501A reselecting another relay or another cell. In some embodiments, UE 501A may transmit an RRC resume request including the cause of "RNA-update" in response to the expiry of the periodic RNA update timer.

It should be appreciated by persons skilled in the art that the sequence of the operations in exemplary procedure 500 may be changed and that some of the operations in exemplary procedure 500 may be eliminated or modified, without departing from the spirit and scope of the disclosure.

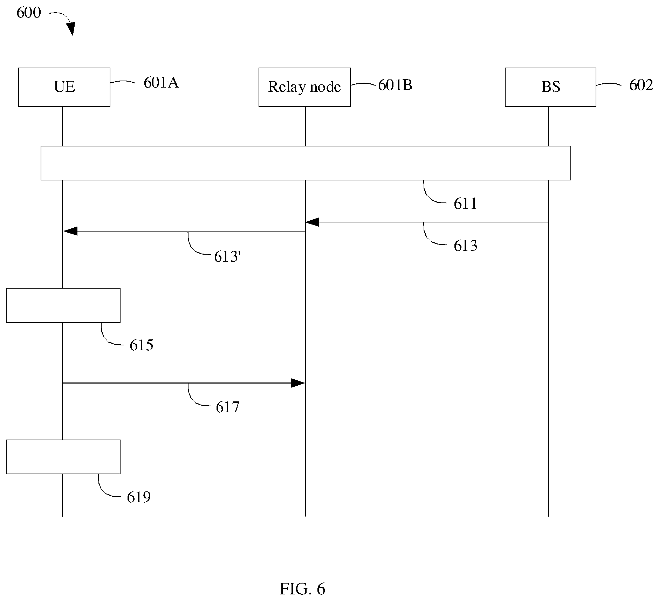

FIG. 6 illustrates a flow chart of an exemplary procedure 600 for wireless communications in accordance with some embodiments of the present disclosure. Details described in all of the foregoing embodiments of the present disclosure are applicable for the embodiments shown in FIG. 6.

Referring to FIG. 6, in operation 611, UE 601A may communicate with BS 602 via relay node 601B. UE 601A may also be referred to as a remote UE. UE 601A may be in an RRC_CONNECTED state (hereinafter, "a connected state"). In some examples, relay node 601B may be a relay UE, such as a layer 2 UE-to-Network (L2 U2N) relay UE. In some examples, BS 602 may transmit an indication which indicates whether an L2 relay is supported or not.

In some examples, BS 602 may transmit an RRC reconfiguration message to UE 601A via relay node 601B. The RRC reconfiguration message may indicate a remote UE related configuration. The configuration may be associated with the PC5 link between UE 601A and relay node 601B. For example, the RRC reconfiguration message may include a relay operation related configuration used by a remote UE.

In some examples, BS 602 may transmit an RRC reconfiguration message to relay node 601B. The RRC reconfiguration message may indicate a relay node related configuration. The configuration may be associated with the PC5 link between UE 601A and relay node 601B. For example, the RRC reconfiguration message may include a relay operation related configuration used by a relay node.

In operations 613 and 613', BS 602 may transmit an RRC release message including a suspend configuration to UE 601A via relay node 601B. In response to the RRC release message including the suspend configuration, UE 601A may enter an inactive state in operation 615.

In some embodiments, when, for example, a timer value of a periodic RNA update is included in the RRC release message, UE 601A may start a periodic RNA update timer (e.g., timer T380 as specified in 3GPP specifications).

In some embodiments, in response to the RRC release message including the suspend configuration, UE 601A may suspend or release (e.g., all) signaling radio bearers (SRBs) and data radio bearers (DRBs) associated with the link between UE 601A and relay node 601B.

In some embodiments, UE 601A may initiate an RNA update which may be a periodic RNA update or may be triggered by the RNA change. In some examples, UE 601A may initiate an RNA update when the periodic RNA update timer expires. In some examples, UE 601A may initiate an RNA update when it reselects a neighbor cell belonging to a different RAN notification area.

In response to the initiation of the RNA update procedure, UE 601A may, in operation 617, transmit an RRC resume request to relay node 601B. The RRC resume request may be an *RRCResumeRequest* or an *RRCResumeRequest1* as specified in 3GPP specifications (e.g., TS38.331). In some embodiments, relay node 601B may be in a connected state, and may transmit the RRC resume request from UE 601A to the network.

In some embodiments, before receiving a response to the RRC resume request, UE 601A may detect an RLF between UE 601A and relay node 601B in operation 619.

In some embodiments, in response to detecting the RLF, UE 601A may set a variable to indicate that there is a pending RNA update procedure. For example, the variable may indicate whether there is a pending RNA update procedure or not. The variable may be a BOOLEAN variable. Setting the variable to "TRUE" may denote that there is a pending RNA update procedure; and setting the variable to "FALSE" may denote that there is no pending RNA update procedure. UE 601A may set the variable to "TRUE."

In some embodiments, in response to detecting the RLF, UE 601A may (re)start a periodic RNA update timer. For example, in the case that the RNA update initiated by UE 601A is a periodic RNA update, UE 601A may restart the periodic RNA update timer.

In some embodiments, in response to detecting the RLF, UE 601A may perform a relay (re)selection or a cell (re)selection. UE 601A may perform an RNA update procedure again. For example, UE 601A may transmit an RRC resume request including the cause of "RNA-update" in response to UE 601A reselecting another relay or another cell. In some embodiments, UE 601A may transmit an RRC resume request including the cause of "RNA-update" in response to the expiry of the periodic RNA update timer.

It should be appreciated by persons skilled in the art that the sequence of the operations in exemplary procedure 600 may be changed and that some of the operations in exemplary procedure 600 may be eliminated or modified, without departing from the spirit and scope of the disclosure.

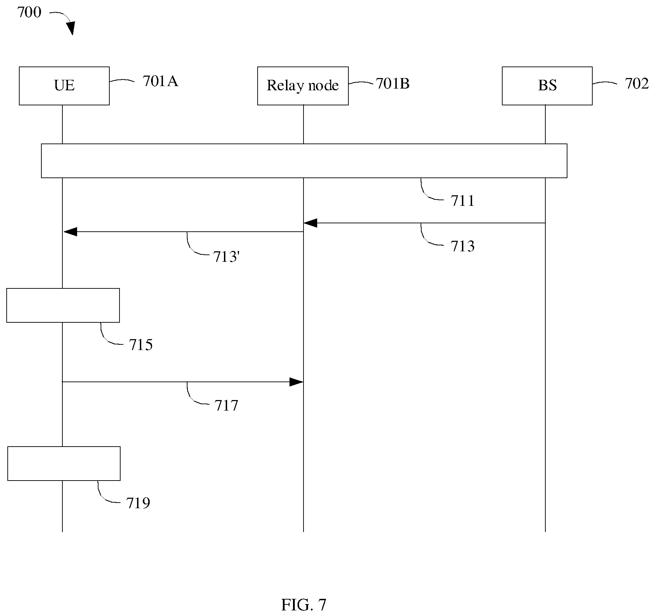

FIG. 7 illustrates a flow chart of an exemplary procedure 700 for wireless communications in accordance with some embodiments of the present disclosure. Details described in all of the foregoing embodiments of the present disclosure are applicable for the embodiments shown in FIG. 7.

Referring to FIG. 7, in operation 711, UE 701A may communicate with BS 702 via relay node 701B. UE 701A may also be referred to as a remote UE. UE 701A may be in an RRC_CONNECTED state (hereinafter, "a connected state"). In some examples, relay node 701B may be a relay UE, such as a layer 2 UE-to-Network (L2 U2N) relay UE. In some examples, BS 702 may transmit an indication which indicates whether an L2 relay is supported or not.

In some examples, BS 702 may transmit an RRC reconfiguration message to UE 701A via relay node 701B. The RRC reconfiguration message may indicate a remote UE related configuration. The configuration may be associated with the PC5 link between UE 701A and relay node 701B. For example, the RRC reconfiguration message may include a relay operation related configuration used by a remote UE.

In some examples, BS 702 may transmit an RRC reconfiguration message to relay node 701B. The RRC reconfiguration message may indicate a relay node related configuration. The configuration may be associated with the PC5 link between UE 701A and relay node 701B. For example, the RRC reconfiguration message may include a relay operation related configuration used by a relay node.

In operations 713 and 713', BS 702 may transmit an RRC release message including a suspend configuration to UE 701A via relay node 701B. In response to the RRC release message including the suspend configuration, UE 701A may enter an inactive state in operation 715.

In some embodiments, when, for example, a timer value of a periodic RNA update is included in the RRC release message, UE 701A may start a periodic RNA update timer (e.g., timer T380 as specified in 3GPP specifications).

In some embodiments, in response to the RRC release message including the suspend configuration, UE 701A may suspend or release (e.g., all) signaling radio bearers (SRBs) and data radio bearers (DRBs) associated with the link between UE 701A and relay node 701B.

In some embodiments, UE 701A may initiate an RNA update. For example, UE 701A may initiate an RNA update when it reselects from the serving cell (e.g., cell #1) to a neighbor cell (e.g., cell #2) belonging to a different RAN notification area. For example, cell #1 may belong to RNA #1, and cell #2 may belong to RNA #2.

In response to the initiation of the RNA update procedure, UE 701A may, in operation 717, transmit an RRC resume request to relay node 701B. The RRC resume request may be an *RRCResumeRequest* or an *RRCResumeRequest1* as specified in 3GPP specifications (e.g., TS38.331). In some embodiments, relay node 701B may be in a connected state, and may transmit the RRC resume request from UE 701A to the network (e.g., BS 702).

In some embodiments, before receiving a response to the RRC resume request, UE 701A may detect an RLF between UE 701A and relay node 701B (hereinafter, "sidelink RLF"). In some embodiments, before receiving a response to the RRC resume request, UE 701A may receive a notification message or a PC5 release message from relay node 701B. In some examples, the notification message may indicate a relay handover, a Uu RLF, a connection establishment failure, or a cell reselection.

In some embodiments, in response to receiving the sidelink RLF, the notification message or the PC5 release message, UE 701A may set a variable to indicate that there is a pending RNA update procedure. For example, the variable may indicate whether there is a pending RNA update procedure or not. The variable may be a BOOLEAN variable. Setting the variable to "TRUE" may denote that there is a pending RNA update procedure; and setting the variable to "FALSE" may denote that there is no pending RNA update procedure. UE 701A may set the variable to "TRUE."

In operation 719, UE 701A may perform a relay (re)selection or a cell (re)selection in response to detecting the sidelink RLF or receiving the notification message or the PC5 release message. For example, UE 701A may reselect a target relay node or a target cell. In the case that the serving cell of the target relay node or the target cell belongs to the same RAN notification area (e.g., RNA #1) as the original serving cell (e.g., cell #1), UE 701A may set the variable indicating whether there is a pending RNA update procedure or not to false.

It should be appreciated by persons skilled in the art that the sequence of the operations in exemplary procedure 700 may be changed and that some of the operations in exemplary procedure 700 may be eliminated or modified, without departing from the spirit and scope of the disclosure.

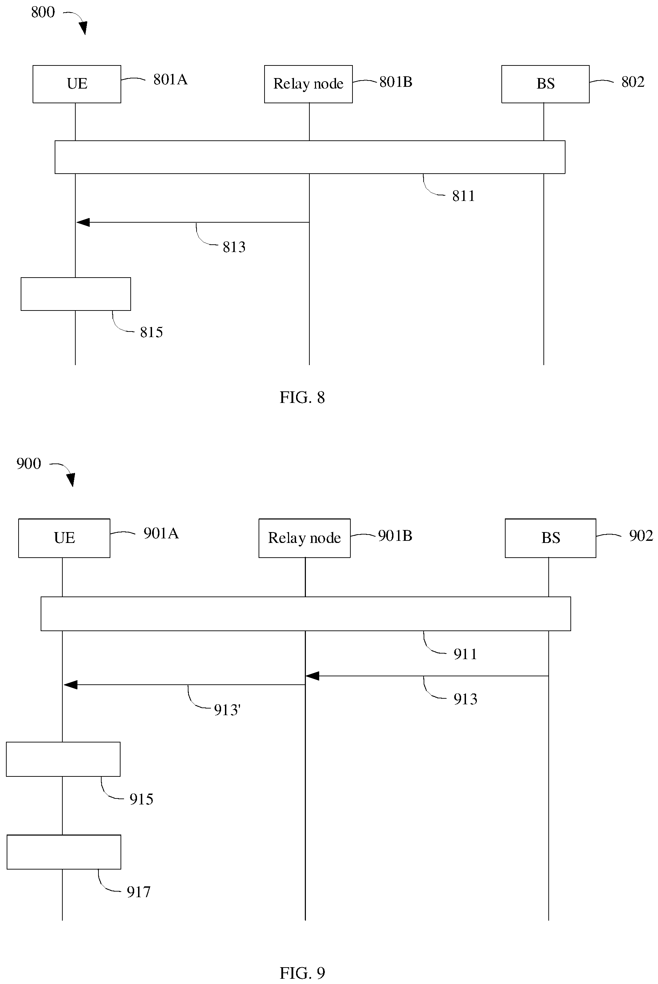

FIG. 8 illustrates a flow chart of an exemplary procedure 800 for wireless communications in accordance with some embodiments of the present disclosure. Details described in all of the foregoing embodiments of the present disclosure are applicable for the embodiments shown in FIG. 8.

Referring to FIG. 8, in operation 811, UE 801A may communicate with BS 802 via relay node 801B. UE 801A may also be referred to as a remote UE. UE 801A may be in an RRC_CONNECTED state (hereinafter, "a connected state"). In some examples, relay node 801B may be a relay UE, such as a layer 2 UE-to-Network (L2 U2N) relay UE. In some examples, BS 802 may transmit an indication which indicates whether an L2 relay is supported or not.

In the current invention, the BS 802 transmits an RRC reconfiguration message to UE 801A via relay node 801B. The RRC reconfiguration message indicates a remote UE related configuration. The configuration may be associated with the PC5 link between UE 801A and relay node 801B. For example, the RRC reconfiguration message may include a relay operation related configuration used by a remote UE.

In the current invention, the BS 802 transmits an RRC reconfiguration message to relay node 801B. The RRC reconfiguration message may indicate a relay node related configuration. The configuration may be associated with the PC5 link between UE 801A and relay node 801B. For example, the RRC reconfiguration message may include a relay operation related configuration used by a relay node.

In operation 813, relay node 801 transmits a notification message to UE 801A. In some embodiments, the notification message may be transmitted due to a handover at relay node 801B, a Uu RLF at relay node 801B (e.g., an RLF on the link between relay node 801B and BS 802), a cell reselection at relay node 801B, or an establishment failure at relay node 801B (e.g., rejection of connection establishment request of relay node 801B by BS 802). The notification message indicates a relay handover, a Uu RLF, a relay cell reselection or a relay connection establishment failure.

In operation 815, UE 801A initiates an RRC reestablishment procedure in response to receiving the notification message.

In some embodiments, in response to the initiation of the RRC reestablishment procedure, UE 801A starts a selection timer for connection reestablishment (e.g., timer T311 as specified in 3GPP specifications) when UE 801A determines not to keep the PC5 RRC connection between UE 801A and relay node 801B. When UE 801A determines to keep the PC5 RRC connection between UE 801A and relay node 801B, UE 801A may not start the selection timer for connection reestablishment. In other words, UE 801A may prohibit the start of the selection timer for connection reestablishment in response to determining to keep the PC5 RRC connection.

In the current invention, in response to the initiation of the RRC reestablishment procedure, UE 801A may start the selection timer for connection reestablishment. UE 801A may determine to keep the PC5 RRC connection between UE 801A and relay node 801B. UE 801A may stop the selection timer for connection reestablishment in response to determining to keep the PC5 RRC connection.

In some embodiments, in response to the initiation of the RRC reestablishment procedure, UE 801A may release at least one of: the remote UE related configuration (if configured) or a dedicated paging delivery configuration for UE 801A (if configured).

In some embodiments, in response to the initiation of the RRC reestablishment procedure and a determination of not keeping the PC5 RRC connection, UE 801A may release at least one of: the remote UE related configuration (if configured) or a dedicated paging delivery configuration for UE 801A (if configured).

In some embodiments, UE 801A may select a target relay in response to the initiation of the RRC reestablishment procedure, for example, when UE 801A determines not to keep the PC5 RRC connection. UE 801A may transmit an RRC reestablishment request message to the network (e.g., BS 802) via the target relay. UE 801A may receive an RRC reestablishment message from the network (e.g., BS 802) via the target relay.

In some embodiments, the cell or relay (re)selection may not happen, for example, when UE 801A determines to keep the PC5 RRC connection. UE 801A may transmit an RRC reestablishment request message to BS 802 via relay node 801B. UE 801A may receive an RRC reestablishment message from BS 802 via relay node 801B.

Although the above descriptions of the configuration release are related to a remote UE, it should be appreciated by persons skilled in the art a relay node may perform similar actions in response to the initiation of the RRC reestablishment procedure. For example, relay node 801B may initiate an RRC reestablishment procedure. In response to the initiation of the RRC reestablishment procedure, relay node 801B may release the relay node related configuration (if configured).

It should be appreciated by persons skilled in the art that the sequence of the operations in exemplary procedure 800 may be changed and that some of the operations in exemplary procedure 800 may be eliminated or modified, without departing from the spirit and scope of the disclosure.

FIG. 9 illustrates a flow chart of an exemplary procedure 900 for wireless communications in accordance with some embodiments of the present disclosure. Details described in all of the foregoing embodiments of the present disclosure are applicable for the embodiments shown in FIG. 9.

Referring to FIG. 9, in operation 911, UE 901A may communicate with BS 902 via relay node 901B. UE 901A may also be referred to as a remote UE. UE 901A may be in an RRC_CONNECTED state (hereinafter, "a connected state"). In some examples, relay node 901B may be a relay UE, such as a layer 2 UE-to-Network (L2 U2N) relay UE. In some examples, BS 902 may transmit an indication which indicates whether an L2 relay is supported or not.

In some examples, BS 902 may transmit an RRC reconfiguration message to UE 901A via relay node 901B. The RRC reconfiguration message may indicate a remote UE related configuration. The configuration may be associated with the PC5 link between UE 901A and relay node 901B. For example, the RRC reconfiguration message may include a relay operation related configuration used by a remote UE.

In some examples, BS 902 may transmit an RRC reconfiguration message to relay node 901B. The RRC reconfiguration message may indicate a relay node related configuration. The configuration may be associated with the PC5 link between UE 901A and relay node 901B. For example, the RRC reconfiguration message may include a relay operation related configuration used by a relay node.

In operations 913 and 913', BS 902 may transmit an RRC release message to UE 901A via relay node 901B. In response to the RRC release message, UE 901A may enter an idle state in operation 915.

In some embodiments, UE 901A may initiate an RRC setup request procedure and transmits RRC setup request message. For example, UE 901A may transmit an RRC setup request message for switching from the idle state to a connected state. UE 901A may start a timer for the RRC setup request message (e.g., timer T300 or T300-RemoteUE as specified in 3GPP specifications) in response to the transmission of the RRC setup request message.

In some embodiments, UE 901A may perform a relay or cell (re)selection. In response to the relay or cell (re)selection or a cell change due to the relay or cell (re)selection at UE 901A when the timer for the RRC setup request message is running, UE 901A may stop the timer for the RRC setup request message. UE 901A may perform the following actions upon going to the idle state with a release cause of "RRC connection failure". The definitions of the parameters and variables mentioned in the following pseudo-code can be found in 3GPP specifications. In response to the relay or cell (re)selection or the cell change due to the relay or cell (re)selection, UE 901A may enter the idle state in operation 917.

UE actions upon going to RRC_IDLE, the UE shall perform at least one of:
- reset medium access control (MAC);
- set the variable *pendingRNA-Update* to *false,* if that is set to *true;*
- stop timer T302, if T302 is running;
- start timer T302 with the value set to the *waitTime;*
- stop timer T390 for all access categories, if running;
- discard the UE Inactive AS context, if any;
- release the *suspendConfig,* if configured;
- remove all the entries within *VarConditionalReconfig,* if any;
- release all radio resources, including release of the RLC entity, the BAP entity, the MAC configuration and the associated PDCP entity and SDAP for all established RBs and BH RLC channels;
- indicate the release of the RRC connection to upper layers together with the release cause;
- discard any segments of segmented RRC messages stored;

In some embodiments, UE 901A may receive a notification message or a PC5 release message from relay node 901B (not shown in FIG. 9). In some examples, relay node 901B may transmit the notification message or the PC5 release message due to a relay handover, a Uu RLF, a relay cell reselection, or a relay connection establishment failure. For example, the notification message may indicate a relay handover, a Uu RLF, a relay cell reselection or a relay connection establishment failure. In response to receiving the notification message or the PC5 release message when the timer for the RRC setup request message is running, UE 901A may stop the timer for the RRC setup request message. UE 901A may perform the above actions upon going to the idle state with a release cause of "RRC connection failure". In response to the receiving of the notification message or the PC5 release message, UE 901A may enter the idle state in operation 917.

It should be appreciated by persons skilled in the art that the sequence of the operations in exemplary procedure 900 may be changed and that some of the operations in exemplary procedure 900 may be eliminated or modified, without departing from the spirit and scope of the disclosure.

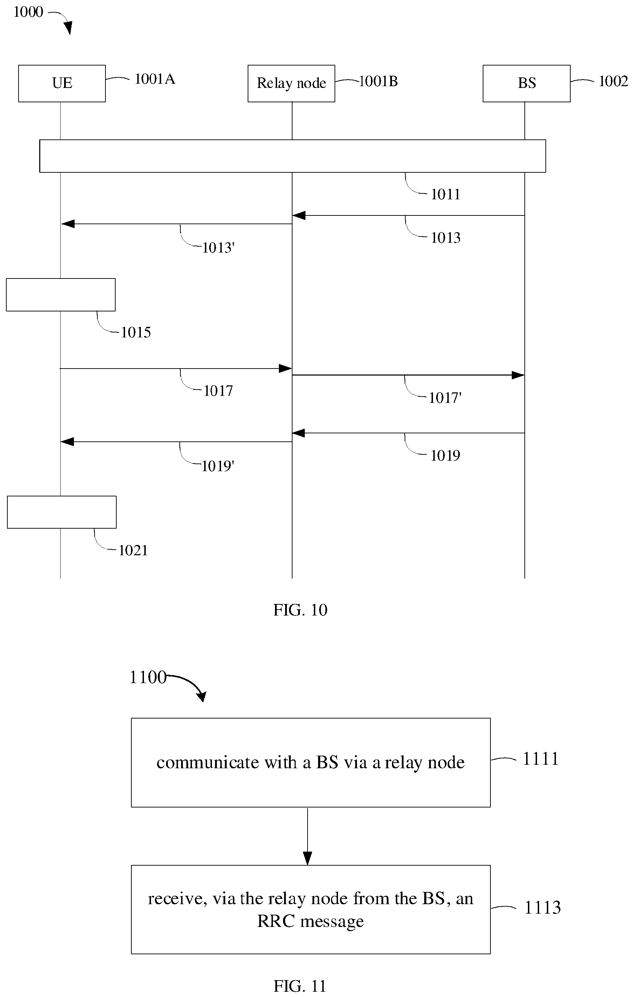

FIG. 10 illustrates a flow chart of an exemplary procedure 1000 for wireless communications in accordance with some embodiments of the present disclosure. Details described in all of the foregoing embodiments of the present disclosure are applicable for the embodiments shown in FIG. 10.

Referring to FIG. 10, in operation 1011, UE 1001A may communicate with BS 1002 via relay node 1001B. UE 1001A may also be referred to as a remote UE. UE 1001A may be in an RRC_CONNECTED state (hereinafter, "a connected state"). In some examples, relay node 1001B may be a relay UE, such as a layer 2 UE-to-Network (L2 U2N) relay UE. In some examples, BS 1002 may transmit an indication which indicates whether an L2 relay is supported or not.

In some examples, BS 1002 may transmit an RRC reconfiguration message to UE 1001A via relay node 1001B. The RRC reconfiguration message may indicate a remote UE related configuration. The configuration may be associated with the PC5 link between UE 1001A and relay node 1001B. For example, the RRC reconfiguration message may include a relay operation related configuration used by a remote UE.

In some examples, BS 1002 may transmit an RRC reconfiguration message to relay node 1001B. The RRC reconfiguration message may indicate a relay node related configuration. The configuration may be associated with the PC5 link between UE 1001A and relay node 1001B. For example, the RRC reconfiguration message may include a relay operation related configuration used by a relay node.

In operations 1013 and 1013', BS 1002 may transmit an RRC release message including a suspend configuration to UE 1001A via relay node 1001B. In response to the RRC release message including the suspend configuration, UE 1001A may enter an inactive state in operation 1015.

In some embodiments, when, for example, a timer value of a periodic RNA update is included in the RRC release message, UE 1001A may start a periodic RNA update timer (e.g., timer T380 as specified in 3GPP specifications).

In some embodiments, in response to the RRC release message including the suspend configuration, UE 1001A may suspend or release (e.g., all) SRBs and DRBs associated with the link between UE 1001A and relay node 1001B. In some embodiments, in response to the RRC release message including the suspend configuration, UE 1001A may release a sidelink relay adaptation protocol (SRAP) related configuration.

In some embodiments, UE 1001A may transmit an RRC resume request to the network, for example, in response to UL data arrival or reception of RAN paging. For example, in operations 1017 and 1017', UE 1001A may transmit an RRC resume request to the network (e.g., BS 1002) via relay node 1001B. In response to the RRC resume request, UE 1001A may receive an RRC resume message from the network (e.g., BS 1002) via relay node 1001B in operations 1019 and 1019'.

In some embodiments, in operation 1021, UE 1001A may resume (e.g., all) the SRBs and the DRBs associated with the link between UE 1001A and relay node 1001B in response to receiving the RRC resume message.

It should be appreciated by persons skilled in the art that the sequence of the operations in exemplary procedure 1000 may be changed and that some of the operations in exemplary procedure 1000 may be eliminated or modified, without departing from the spirit and scope of the disclosure.

FIG. 11 illustrates a flow chart of an exemplary procedure 1100 for wireless communications in accordance with some embodiments of the present disclosure. Details described in all of the foregoing embodiments of the present disclosure are applicable for the embodiments shown in FIG. 11. In some examples, the procedure may be performed by a UE, for example, UE 101C in FIG. 1.

Referring to FIG. 11, in operation 1111, a UE may communicate with a BS via a relay node. In operation 1113, the UE may receive, via the relay node from the BS, an RRC message. The RRC message may be one of the following: an RRC release message (hereinafter, "first RRC release message"); an RRC release message including a suspend configuration (hereinafter, "second RRC release message"); and an RRC reconfiguration message indicating a remote UE related configuration.

In some embodiments, the UE may enter an inactive state in response to receiving the second RRC release message; initiate an RNA update procedure when the UE is in the inactive state; transmit an RRC resume request in response to the initiation of the RNA update procedure; and receive a notification message or a PC5 release message from the relay node before receiving a response to the RRC resume request.

In some embodiments, the notification message may indicate a handover of the relay node or an RLF between the relay node and the BS. The UE may perform at least one of the following in response to receiving the notification message or the PC5 release message: setting a variable indicating whether there is a pending RNA update procedure or not to true; or starting a periodic RNA update timer.

In some embodiments, the notification message may indicate a connection establishment failure, a handover of the relay node or a cell reselection at the relay node. The UE may perform at least one of the following in response to receiving the notification message or the PC5 release message: setting a variable indicating whether there is a pending RNA update procedure or not to true; or starting a periodic RNA update timer. In some embodiments, the notification message or the PC5 release message may indicate a time value, which may indicate at least one of the following: an access barring time at the relay node; a wait time associated with an access rejection at the relay node; a value of a timer associated with a handover associated with the relay node; or a suggested time for a next transmission.

In some embodiments, the UE may enter an inactive state in response to receiving the second RRC release message; initiate an RNA update procedure when the UE is in the inactive state; transmit an RRC resume request in response to the initiation of the RNA update procedure; and detect an RLF between the UE and the relay node before receiving a response to the RRC resume request. In some embodiments, the UE may perform at least one of the following in response to detecting the RLF: setting a variable indicating whether there is a pending RNA update procedure or not to true; or starting a periodic RNA update timer.

In some embodiments, the UE may reselect a target relay node or a target cell in response to receiving the notification message or the PC5 release message, or detecting the RLF between the UE and the relay node. the UE may set the variable indicating whether there is a pending RNA update procedure or not to false in response to that the RNA update procedure is initiated for a RAN notification area change from a first RAN notification area to a second RAN notification area and a serving cell of the target relay node or the target cell belongs to the first RAN notification area.

In some embodiments, the RRC message may be the RRC reconfiguration message. The UE may receive a notification message from the relay node, wherein the notification message indicates at least one of: a handover of the relay node, an RLF between the relay node and the BS, a cell reselection at the relay node, or a connection establishment failure at the relay node. The UE may initiate an RRC reestablishment procedure in response to receiving the notification message. The UE may perform one of the following in response to the initiation of the RRC reestablishment procedure: starting a selection timer for connection reestablishment; starting the selection timer for connection reestablishment in response to determining not to keep a PC5 RRC connection between the UE and the relay node; or prohibiting the start of the selection timer for connection reestablishment in response to determining to keep the PC5 RRC connection.

In some embodiments, the UE may determine to keep the PC5 RRC connection between the UE and the relay node; and stop the selection timer for connection reestablishment in response to determining to keep the PC5 RRC connection. In some embodiments, the UE may, in response to the initiation of the RRC reestablishment procedure or in response to the initiation of the RRC reestablishment procedure and a determination of not keeping the PC5 RRC connection, release at least one of: the remote UE related configuration, or a dedicated paging delivery configuration for the UE.

In some embodiments, the UE may enter an idle state in response to receiving the first RRC release message. The UE may transmit an RRC setup request message for switching from the idle state to a connected state, and start a timer for the RRC setup request message in response to the transmission of the RRC setup request message. The UE may stop the timer for the RRC setup request message in response to at least one of the following: a relay (re)selection at the UE; a cell change due to the relay (re)selection at the UE; or receiving, from the relay node, a notification message or a PC5 release message.

In some embodiments, the UE may suspend or release SRBs and DRBs associated with a link between the UE and the relay node in response to receiving the second RRC release message including a suspend configuration. The UE may transmit an RRC resume request, and receive an RRC resume message in response to the RRC resume request. The UE may resume the SRBs and the DRBs associated with the link between the UE and the relay node in response to receiving the RRC resume message.

It should be appreciated by persons skilled in the art that the sequence of the operations in exemplary procedure 1100 may be changed and some of the operations in exemplary procedure 1100 may be eliminated or modified, without departing from the spirit and scope of the disclosure.

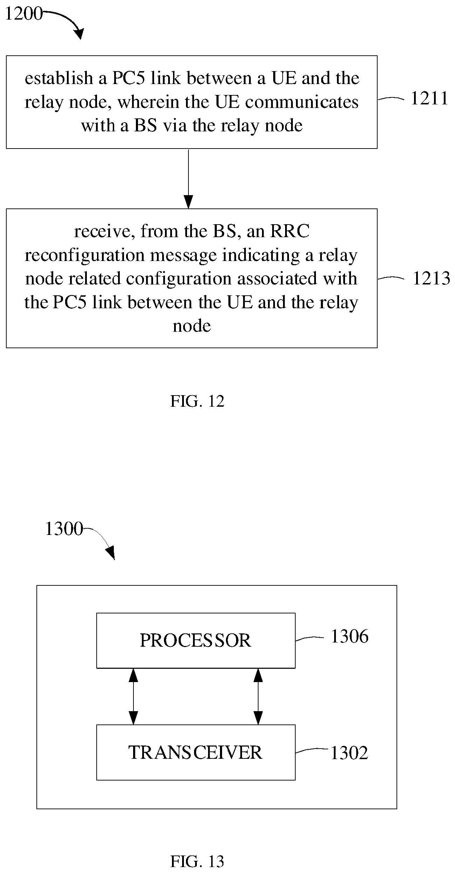

FIG. 12 illustrates a flow chart of an exemplary procedure 1200 for wireless communications in accordance with some embodiments of the present disclosure. Details described in all of the foregoing embodiments of the present disclosure are applicable for the embodiments shown in FIG. 12. In some examples, the procedure may be performed by a relay node, for example, UE 101A or UE 101B in FIG. 1.

Referring to FIG. 12, in operation 1211, a relay node may establish a PC5 link between a UE and the relay node, wherein the UE communicates with a BS via the relay node. In operation 1213, the relay node may receive, from the BS, an RRC reconfiguration message indicating a relay node related configuration associated with the PC5 link between the UE and the relay node.

In some embodiments, the relay node may initiate an RRC reestablishment procedure. The relay node may release the relay node related configuration in response to the initiation of the RRC reestablishment procedure.

In some embodiments, the relay node may receive an RRC resume request from the UE. In some examples, the relay node may be in an idle state. The relay node may initiate a connection establishment procedure in response to receiving the RRC resume request. In some examples, the relay node may be in an inactive state. The relay node may initiate a connection resume procedure in response to receiving the RRC resume request. In some examples, the relay node may be in a connected state. In some embodiments, in response to a failure of the connection establishment procedure, the connection resume procedure, a handover at the relay node, or a cell reselection at the relay node, the relay node may transmit a notification message or a PC5 release message to the UE.

In some embodiments, the notification message or the PC5 release message may indicate a time value, which may indicate at least one of the following: an access barring time associated with a barred access attempt of the relay node; a wait time associated with an RRC rejection of the relay node from the BS; a value of a timer associated with a handover associated with the relay node; or a suggested time for a next transmission.

It should be appreciated by persons skilled in the art that the sequence of the operations in exemplary procedure 1200 may be changed and some of the operations in exemplary procedure 1200 may be eliminated or modified, without departing from the spirit and scope of the disclosure.

FIG. 13 illustrates a block diagram of an exemplary apparatus 1300 according to some embodiments of the present disclosure.

As shown in FIG. 13, the apparatus 1300 may include at least one processor 1306 and at least one transceiver 1302 coupled to the processor 1306. The apparatus 1300 may be a BS, a relay node or a UE.

Although in this figure, elements such as the at least one transceiver 1302 and processor 1306 are described in the singular, the plural is contemplated unless a limitation to the singular is explicitly stated. In some embodiments of the present application, the transceiver 1302 may be divided into two devices, such as a receiving circuitry and a transmitting circuitry. In some embodiments of the present application, the apparatus 1300 may further include an input device, a memory, and/or other components.

In some embodiments of the present application, the apparatus 1300 may be a UE. The transceiver 1302 and the processor 1306 may interact with each other so as to perform the operations with respect to the UEs described in FIGS. 1-12. In some embodiments of the present application, the apparatus 1300 may be a relay node. The transceiver 1302 and the processor 1306 may interact with each other so as to perform the operations with respect to the relay nodes described in FIGS. 1-12. In some embodiments of the present application, the apparatus 1300 may be a BS. The transceiver 1302 and the processor 1306 may interact with each other so as to perform the operations with respect to the BSs described in FIGS. 1-12.

In some embodiments of the present application, the apparatus 1300 may further include at least one non-transitory computer-readable medium.

For example, in some embodiments of the present disclosure, the non-transitory computer-readable medium may have stored thereon computer-executable instructions to cause the processor 1306 to implement the method with respect to the UEs as described above. For example, the computer-executable instructions, when executed, cause the processor 1306 interacting with transceiver 1302 to perform the operations with respect to the UEs described in FIGS. 1-12.

In some embodiments of the present disclosure, the non-transitory computer-readable medium may have stored thereon computer-executable instructions to cause the processor 1306 to implement the method with respect to the relay nodes as described above. For example, the computer-executable instructions, when executed, cause the processor 1306 interacting with transceiver 1302 to perform the operations with respect to the relay nodes described in FIGS. 1-12.

In some embodiments of the present disclosure, the non-transitory computer-readable medium may have stored thereon computer-executable instructions to cause the processor 1306 to implement the method with respect to the BSs as described above. For example, the computer-executable instructions, when executed, cause the processor 1306 interacting with transceiver 1302 to perform the operations with respect to the BSs described in FIGS. 1-12.

Those having ordinary skill in the art would understand that the operations or steps of a method described in connection with the aspects disclosed herein may be embodied directly in hardware, in a software module executed by a processor, or in a combination of the two. A software module may reside in RAM memory, flash memory, ROM memory, EPROM memory. EEPROM memory, registers, a hard disk, a removable disk, a CD-ROM, or any other form of storage medium known in the art. Additionally, in some aspects, the operations or steps of a method may reside as one or any combination or set of codes and/or instructions on a non-transitory computer-readable medium, which may be incorporated into a computer program product.

While this disclosure has been described with specific embodiments thereof, it is evident that many alternatives, modifications, and variations may be apparent to those skilled in the art. For example, various components of the embodiments may be interchanged, added, or substituted in other embodiments. Also, all of the elements of each figure are not necessary for the operation of the disclosed embodiments. For example, one of ordinary skill in the art of the disclosed embodiments would be enabled to make and use the teachings of the disclosure by simply employing the elements of the independent claims. Accordingly, embodiments of the disclosure as set forth herein are intended to be illustrative, not limiting. The invention is only limited by the scope of the appended claims.

In this document, the terms "includes," "including," or any other variation thereof, are intended to cover a non-exclusive inclusion, such that a process, method, article, or apparatus that includes a list of elements does not include only those elements but may include other elements not expressly listed or inherent to such process, method, article, or apparatus. An element proceeded by "a," "an," or the like does not, without more constraints, preclude the existence of additional identical elements in the process, method, article, or apparatus that includes the element. Also, the term "another" is defined as at least a second or more. The term "having" and the like, as used herein, are defined as "including." Expressions such as "A and/or B" or "at least one of A and B" may include any and all combinations of words enumerated along with the expression. For instance, the expression "A and/or B" or "at least one of A and B" may include A, B, or both A and B. The wording "the first," "the second" or the like is only used to clearly illustrate the embodiments of the present application, but is not used to limit the substance of the present application.

## Claims

1. A user equipment, UE (801A), comprising:
a transceiver (1302); and
a processor (1306) coupled to the transceiver, wherein the processor is configured to:
communicate (811) with a base station, BS, (802) via a relay node (801B);
receive, via the relay node from the BS, a radio resource control, RRC, reconfiguration message indicating a remote UE related configuration;
**characterized in that** the processor is further configured to:
receive (813) a notification message from the relay node, wherein the notification message indicates at least one of: a handover of the relay node, a radio link failure, RLF, between the relay node and the BS, a cell reselection at the relay node, or a connection establishment failure at the relay node;
initiate (815) an RRC reestablishment procedure in response to receiving the notification message; and
in response to the initiation of the RRC reestablishment procedure, start a selection timer for connection reestablishment.

2. The UE of Claim 1, wherein the processor is further configured to:
determine to keep a PC5 RRC connection between the UE and the relay node; and
stop the selection timer for connection reestablishment in response to determining to keep the PC5 RRC connection.

3. The UE of Claim 1, wherein the processor is further configured to:
in response to the initiation of the RRC reestablishment procedure, release the remote UE related configuration.

4. The UE of Claim 1, wherein the processor is further configured to:
in response to the initiation of the RRC reestablishment procedure, release a dedicated paging delivery configuration for the UE.

5. A relay node (801B), comprising:
a transceiver (1302); and
a processor (1306) coupled to the transceiver, wherein the processor is configured to:
establish (1211) a PC5 link between a user equipment, UE, (801A) and the relay node, wherein the UE communicates with a base station, BS, (802) via the relay node;
receive (1213), from the BS, a radio resource control, RRC, reconfiguration message indicating a relay node related configuration associated with the PC5 link between the UE and the relay node
**characterized in that** the processor is further configured to:
initiate an RRC reestablishment procedure; and
release the relay node related configuration in response to the initiation of the RRC reestablishment procedure.

6. A method performed by a user equipment, UE, (801A), comprising:
communicating (811) with a base station, BS, (802) via a relay node (801B);
receiving, via the relay node from the BS, a radio resource control, RRC, reconfiguration message indicating a remote UE related configuration;
**characterized in that** the method is further comprising:
receiving (813) a notification message from the relay node, wherein the notification message indicates at least one of: a handover of the relay node, a radio link failure, RLF, between the relay node and the BS, a cell reselection at the relay node, or a connection establishment failure at the relay node;
initiating (815) an RRC reestablishment procedure in response to receiving the notification message; and
in response to the initiation of the RRC reestablishment procedure, starting a selection timer for connection reestablishment.

7. The method of Claim 6, the method further comprising:
determining to keep a PC5 RRC connection between the UE and the relay node; and
stopping the selection timer for connection reestablishment in response to determining to keep the PC5 RRC connection.

8. The method of Claim 6, the method further comprising:
in response to the initiating of the RRC reestablishment procedure, releasing the remote UE related configuration.

9. The method of Claim 6, the method further comprising:
in response to the initiating of the RRC reestablishment procedure, releasing a dedicated paging delivery configuration for the UE.

## Patentansprüche

1. Benutzergerät, UE (801A), umfassend:
einen Transceiver (1302); und
einen mit dem Transceiver gekoppelten Prozessor (1306), wobei der Prozessor konfiguriert ist zum:
Kommunizieren (811) mit einer Basisstation, BS, (802) über einen Relaisknoten (801B);
Empfangen einer Funkressourcensteuerungs-, RRC-, Rekonfigurationsnachricht über den Relaisknoten von der BS, die eine Konfiguration des entfernten UE angibt;
**dadurch gekennzeichnet, dass** der Prozessor weiter konfiguriert ist zum:
Empfangen (813) einer Benachrichtigungsnachricht von dem Relaisknoten, wobei die Benachrichtigungsnachricht mindestens eines angibt von: einem Handover des Relaisknotens, einem Funkverbindungsausfall, RLF, zwischen dem Relaisknoten und der BS, einer Zellenneuauswahl an dem Relaisknoten oder einem Verbindungsaufbaufehler an dem Relaisknoten;
Initiieren (815) einer RRC-Wiederherstellungsvorgehensweise als Reaktion auf das Empfangen der Benachrichtigungsnachricht; und
als Reaktion auf die Initiierung der RRC-Wiederherstellungsvorgehensweise, Starten eines Auswahl-Timers zur Verbindungswiederherstellung.

2. UE nach Anspruch 1, wobei der Prozessor weiter konfiguriert ist zum:
Bestimmen, eine PC5-RRC-Verbindung zwischen dem UE und dem Relaisknoten beizubehalten; und
Stoppen des Auswahl-Timers zur Verbindungswiederherstellung, als Reaktion auf das Bestimmen die PC5-RRC-Verbindung beizubehalten.

3. UE nach Anspruch 1, wobei der Prozessor weiter konfiguriert ist zum:
als Reaktion auf die Initiierung der RRC-Wiederherstellungsvorgehensweise, Freigeben der das entfernte UE betreffenden Konfiguration.

4. UE nach Anspruch 1, wobei der Prozessor weiter konfiguriert ist zum:
als Reaktion auf die Initiierung der RRC-Wiederherstellungsvorgehensweise, Freigeben einer dedizierten Paging-Zustellungskonfiguration für das UE.

5. Relaisknoten (801B), umfassend:
einen Transceiver (1302); und
einen mit dem Transceiver gekoppelten Prozessor (1306), wobei der Prozessor konfiguriert ist zum:
Herstellen (1211) einer PC5-Verbindung zwischen einem Benutzergerät, UE, (801A) und dem Relaisknoten, wobei das UE über den Relaisknoten mit einer Basisstation, BS, über den Relaisknoten (802) in Kommunikation steht;
Empfangen (1213) von der Basisstation einer RRC-Neukonfigurationsnachricht, eine Relaisknoten betrefenden Konfiguration, der der PC5-Verbindung zwischen dem Endgerät und dem Relaisknoten zugeordnet ist, angibt,
**dadurch gekennzeichnet, dass** der Prozessor weiter konfiguriert ist zum:
Initiieren einer RRC-Wiederherstellungsvorgehensweise; und
Freigeben der Relaisknoten betreffenden Konfiguration als Reaktion auf die Initiierung der RRC-Wiederherstellungsvorgehensweise.

6. Verfahren, das von einem Benutzergerät, UE, durchgeführt wird, umfassend:
Kommunizieren (811) mit einer Basisstation, BS, (802) über einen Relaisknoten (801B);
Empfangen einer Funkressourcensteuerung, RRC, über den Relaisknoten von der BS,
wobei die Neukonfigurationsnachricht eine Konfiguration angibt, die ein entferntes UE betrifft;
**dadurch gekennzeichnet, dass** das Verfahren weiter Folgendes umfasst:
Empfangen (813) einer Benachrichtigungsnachricht von dem Relaisknoten, wobei die Benachrichtigungsnachricht mindestens eines angibt von: einem Handover des Relaisknotens, einem Funkverbindungsausfall, RLF, zwischen dem Relaisknoten und der BS, einer Zellenneuauswahl an dem Relaisknoten oder einem Verbindungsaufbaufehler an dem Relaisknoten;
Initiieren (815) einer RRC-Wiederherstellungsvorgehensweise als Reaktion auf das Empfangen der Benachrichtigungsnachricht; und
als Reaktion auf die Initiierung der RRC-Wiederherstellungsvorgehensweise, Starten eines Auswahl-Timers zur Verbindungswiederherstellung.

7. Verfahren nach Anspruch 6, wobei das Verfahren weiter Folgendes umfasst:
Bestimmen, eine PC5-RRC-Verbindung zwischen dem UE und dem Relaisknoten beizubehalten; und
Stoppen des Auswahl-Timers zur Verbindungswiederherstellung als Reaktion auf das Bestimmen, die PC5-RRC-Verbindung beizubehalten.

8. Verfahren nach Anspruch 6, wobei das Verfahren weiter Folgendes umfasst:
als Reaktion auf die Initiierung der RRC-Wiederherstellungsvorgehensweise, Freigeben der das entfernte UE betreffenden Konfiguration.

9. Verfahren nach Anspruch 6, wobei das Verfahren weiter Folgendes umfasst:
als Reaktion auf die Initiierung der RRC-Wiederherstellungsvorgehensweise, Freigeben einer dedizierten Paging-Zustellungskonfiguration für das UE.

## Revendications

1. Équipement utilisateur, UE (801A) comprenant :
un émetteur-récepteur (1302) ; et
un processeur (1306) couplé à l'émetteur-récepteur, dans lequel le processeur est en outre configuré pour :
communiquer (811) avec une station de base, BS, (802) via un nœud relais (801B) ;
recevoir, via le nœud relais de la BS, un message de reconfiguration de commande des ressources radio, RRC, indiquant une configuration relative à un UE distant ;
**caractérisé en ce que** le processeur est en outre configuré pour :
recevoir (813) un message de notification du nœud relais, dans lequel le message de notification indique au moins un parmi : un transfert du nœud relais, un défaut de liaison radio, RLF, entre le nœud relais et la BS, une resélection de cellule au niveau du nœud relais ou un défaut d'établissement de connexion au niveau du nœud relais ;
initier (815) une procédure de rétablissement RRC en réponse à la réception du message de notification ; et
en réponse à l'initiation de la procédure de rétablissement RRC, démarrer un minuteur de sélection pour le rétablissement de la connexion.

2. UE selon la revendication 1, dans lequel le processeur est en outre configuré pour :
décider de maintenir une connexion PC5 RRC entre l'UE et le nœud relais ; et
arrêter le minuteur de sélection pour le rétablissement de la connexion en réponse à la décision de maintenir la connexion PC5 RRC.

3. UE selon la revendication 1, dans lequel le processeur est en outre configuré pour :
en réponse à l'initiation de la procédure de rétablissement RRC, libérer la configuration relative à l'UE distant.

4. UE selon la revendication 1, dans lequel le processeur est en outre configuré pour :
en réponse à l'initiation de la procédure de rétablissement RRC, libérer une configuration de distribution de pagination dédiée pour l'UE.

5. Nœud relais (801B) comprenant :
un émetteur-récepteur (1302) ; et
un processeur (1306) couplé à l'émetteur-récepteur, dans lequel le processeur est en outre configuré pour :
établir (1211) une liaison PC5 entre un équipement utilisateur, UE, (801A) et le nœud relais, dans lequel l'UE communique avec une station de base, BS, (802) via le nœud relais ;
recevoir (1213), de la BS, un message de reconfiguration de commande des ressources radio, RRC, indiquant une configuration relative au nœud relais associée à la liaison PC5 entre l'UE et le nœud relais
**caractérisé en ce que** le processeur est en outre configuré pour :
initier une procédure de rétablissement RRC ; et
libérer la configuration relative au nœud relais en réponse à l'initiation de la procédure de rétablissement RRC.

6. Procédé exécuté par un équipement utilisateur, UE, (801A) comprenant :
la communication (811) avec une station de base, BS, (802) via un nœud relais (801B) ;
la réception, via le nœud relais de la BS, d'une commande de ressources radio, RRC,
le message de reconfiguration indiquant une configuration relative à un UE distant ;
**caractérisé en ce que** le procédé comprend en outre :
la réception (813) d'un message de notification du nœud relais, dans lequel le message de notification indique au moins un parmi : un transfert du nœud relais, un défaut de liaison radio, RLF, entre le nœud relais et la BS, une resélection de cellule au niveau du nœud relais ou un défaut d'établissement de connexion au niveau du nœud relais ;
l'initiation (815) d'une procédure de rétablissement RRC en réponse à la réception du message de notification ; et
en réponse à l'initiation de la procédure de rétablissement RRC, le démarrage d'un minuteur de sélection pour le rétablissement de la connexion.

7. Procédé selon la revendication 6, le procédé comprenant en outre :
la décision de maintenir une connexion PC5 RRC entre l'UE et le nœud relais ; et
l'arrêt du minuteur de sélection pour le rétablissement de la connexion en réponse à la décision de maintenir la connexion PC5 RRC.

8. Procédé selon la revendication 6, le procédé comprenant en outre :
en réponse à l'initiation de la procédure de rétablissement RRC, la libération de la configuration relative à l'UE distant.

9. Procédé selon la revendication 6, le procédé comprenant en outre :
en réponse à l'initiation de la procédure de rétablissement RRC, la libération d'une configuration de distribution de pagination dédiée pour l'UE.
